# DEMANDE DE BREVET EUROPEEN

(11) **EP 2 262 003 A1**
(43) Date de publication de la demande: **15.12.2010**
(21) Numéro de dépôt: 10290315.0
(22) Date de dépôt: 10.06.2010
(51) Int. Cl.: H01L 31/048

(54) **Dispositif d'assemblage entre un panneau photovoltaïque et un corps de tuile que comprend un élément de couverture d'un bâtiment**

(30) Priorité: 10.06.2009 FR 0902799
(71) Demandeur: Mediat's, 01250 Hautecourt Romaneche (FR)
(72) Inventeur: Durand, Michel, 71100 Chalon sur Saone (FR)
(74) Mandataire: Oudin, Stéphane

(57) **Abrégé**

L'invention a pour objet un dispositif d'assemblage entre un panneau photovoltaïque (2) et un corps de tuile (1) que comprend un élément de couverture d'une toiture de bâtiment. Des brides (15, 16) ancrables sur le corps de tuile (1) prennent directement appui contre le panneau photovoltaïque (2) à l'encontre de son plaquage contre une assise du corps de tuile (1). Les brides (15, 16) comportent des pions (19) de positionnement qui coopèrent avec des fûts (20) ménagés dans le corps de tuile (1) et qui sont évidés pour recevoir un organe de fixation. Le panneau photovoltaïque (2) est disposé dans une cavité (10) du corps de tuile (1) qui est ouverte à sa base et qui est munie de reliefs (25) formant l'assise en ménageant entre eux des passages d'air et d'eau.

## Description

L'invention est du domaine de la couverture des bâtiments, et plus particulièrement du domaine des éléments de couverture d'un bâtiment. Plus spécifiquement, les éléments de couverture sont du type agencés pour être installés en pluralité sur une charpente par rangées superposées, et sont individuellement équipés d'un panneau photovoltaïque. Elle a pour objet un dispositif d'assemblage entre un tel panneau photovoltaïque et un corps de tuile que comprend l'élément de couverture, ainsi qu'un élément de couverture associant un tel corps de tuile et un tel panneau photovoltaïque.

Parmi les différents types de couverture des bâtiments, on connaît celui consistant à élever une charpente pour soutenir des éléments de couverture. De tels éléments de couverture sont agencés en corps de tuile ou analogue, dont la conformation procure une mise en coopération par emboîtement des éléments de couverture entre eux et/ou avec des éléments structurels de la charpente. A partir de ces mises en coopération par emboîtement, les éléments de couverture peuvent être installés en pluralité sur la charpente par rangées superposées suivant la pente de la couverture. On pourra par exemple se reporter au document FR 2.809.431 qui décrit un tel type de couverture.

Il est connu dans le domaine de la couverture des bâtiments d'équiper les éléments de couverture d'au moins un panneau photovoltaïque. Un tel panneau photovoltaïque est susceptible d'être composé d'une ou de plusieurs cellules photovoltaïques qui sont électriquement reliés entre elles. Le panneau photovoltaïque est rapporté sur le corps de tuile, et est doté d'une connectique de raccordement avec le panneau photovoltaïque d'un élément de couverture voisin et/ou avec un réseau de distribution en énergie. Selon l'agencement global souhaité de la toiture, le corps de tuile d'un élément de couverture est susceptible d'être équipé ou non d'un panneau photovoltaïque, sans que cela ne porte atteinte aux mises en coopération nécessaires à l'installation des corps de tuile sur la charpente par rangées superposées.

Un problème général posé réside dans l'apport du panneau photovoltaïque sur le corps de tuile. De manière traditionnelle, cet apport est réalisé par scellement, par vitrification, par clipsage, par crochetage voire encore par encastrement. Par exemple selon FR 2.921.397 (RIVOT), le panneau photovoltaïque est placé à l'intérieur d'un châssis à double armature assemblée, qui est rapporté par crochetage sur un corps de tuile de conformation quelconque. Par exemple encore selon US 2007/0199590 (MASAO TANAKA), le panneau photovoltaïque est placé à l'intérieur d'un châssis à double armature assemblée formant corps de tuile. Ce châssis coopère avec un châssis voisin pour composer une surface de couverture en substitution d'éléments de couverture courants. On pourra aussi se reporter au document WO 2006/082399 (POWER TILE Ltd) qui décrit un corps de tuile permettant l'installation par encastrement coulissant d'un panneau photovoltaïque à l'intérieur d'un corps de tuile, qui induit une mise en relation spontanée du panneau photovoltaïque avec une connectique de raccordement en conséquence de son installation sur le corps de tuile. Le document JP 2004143910 (SHINTO CO Ltd) décrit encore un autre mode de liaison d'un panneau photovoltaïque à un corps de tuile : des éléments de liaison, à l'une de leur extrémité, prennent en étau la plaque photovoltaïque le long de deux bords opposés, tandis que l'autre extrémité est engagée, par déformation élastique de l'élément de liaison, dans une rainure latérale spécialement aménagée dans le corps de tuile. La plaque photovoltaïque est ainsi pincée uniquement par ces éléments de liaison (au nombre de quatre) et maintenue en suspension au-dessus du corps de tuile sans être plaquée contre celui-ci.

Diverses contraintes doivent être prises en compte pour l'obtention d'un assemblage satisfaisant entre le panneau photovoltaïque et le corps de tuile. Il est avantageux que l'apport du panneau photovoltaïque sur un corps de tuile puisse être effectué rapidement et à moindres coûts. L'assemblage obtenu entre le panneau photovoltaïque et le corps de tuile doit être fiable et pérenne, tout en procurant de préférence une faculté d'amovibilité du panneau photovoltaïque en vue de son remplacement et/ou d'une opération de maintenance. Le positionnement du panneau photovoltaïque sur le corps de tuile doit être précis et permettre un raccordement simple et aisé des panneaux photovoltaïques entre eux par l'intermédiaire des connecteurs dont ils sont équipés. En outre, et au regard de la faculté souhaitée d'autoriser une mise en coopération entre deux éléments de couverture voisins qu'ils soient ou non individuellement équipés d'un panneau photovoltaïque, il est avantageux que l'apport du panneau photovoltaïque n'induise pas une modification conséquente de la conformation du corps de tuile et des modalités d'emboîtement des éléments de couverture entre eux. Les moyens structurels d'apport du panneau photovoltaïque doivent être simples et peu encombrants pour ne pas induire un accroissement inopportun du volume des éléments de couverture. Enfin, des précautions doivent être prises pour éviter un comportement et/ou un fonctionnement non satisfaisant du panneau photovoltaïque en conséquence de son assemblage sur le corps de tuile.

Le but de la présente invention est de proposer un dispositif d'assemblage entre un panneau photovoltaïque et un corps de tuile que comprend un élément de couverture.

Il est plus particulièrement visé par la présente invention de proposer un tel dispositif d'assemblage qui procure des solutions aux différentes contraintes qui ont été exposées, voire qui propose des compromis entre de telles solutions pour parvenir à surmonter les difficultés liées à ces contraintes. La présente invention vise aussi à proposer un élément de couverture comprenant un corps de tuile et au moins un panneau photovoltaïque montés l'un à l'autre par un tel dispositif d'assemblage.

Le dispositif de la présente invention est un dispositif d'assemblage entre au moins un panneau photovoltaïque globalement plan et un corps de tuile que comprend un élément de couverture d'une toiture de bâtiment. Cette toiture de bâtiment comprend notamment une charpente recouverte par une pluralité de dits éléments de couverture, qui sont installés par rangées superposées suivant la pente de la toiture. Parmi cette pluralité d'éléments de couverture installés sur la toiture, certains sont susceptibles d'être équipés d'un dit panneau photovoltaïque tandis que d'autres en sont exempts. L'installation des éléments de couverture par rangées superposées implique que les corps de tuile qu'ils comportent sont de conformation analogue et sont aptes à coopérer par emboîtement entre eux et avec des éléments porteurs que comprend la charpente, que les corps de tuile sont porteur ou non d'un panneau photovoltaïque. Les corps de tuile sont notamment obtenus par moulage d'un matériau plastique, par exemple ABS (acrylonitrile butadiène styrène), PVC (chlorure de polyvinyle) ou matériau analogue notamment.

Selon la présente invention, ce dispositif d'assemblage est principalement reconnaissable en ce qu'il comprend des brides ancrables sur le corps de tuile. Ces brides prennent directement appui contre la grande face extérieure du panneau photovoltaïque à l'encontre de son plaquage à sa grande face opposée intérieure directement contre une assise formée par le corps de tuile.

On comprendra par grandes faces du panneau photovoltaïque ses faces s'étendant suivant son plan général, la grande face extérieure étant celle orientée vers l'environnement extérieur lorsque l'élément de couverture est installé sur la toiture, et inversement, la grande face intérieure étant celle orientée vers l'intérieur du bâtiment lorsque l'élément de couverture est installé sur la toiture.

On comprendra aussi par la notion de bridage du panneau photovoltaïque contre le corps de tuile, et par les notions d'appui direct de la bride contre la grande face extérieure du panneau, et d'appui direct de la grande face intérieure du panneau contre l'assise du corps de tuile, une prise d'appui indépendante exercée par les organes correspondant. L'indépendance de cette structure de bridage et de prises d'appui direct implique que les organes concernés sont successivement mis en coopération à partir d'une boucle mécaniquement fermée de prise d'appui, sans nécessiter la mise en oeuvre ou l'exploitation d'autres organes extérieurs devant être notamment assemblés ou joints entre eux. Plus spécifiquement, la mise en coopération successive par appuis directs entre le corps de tuile et les brides ancrées sur le corps de tuile, entre les brides et le panneau photovoltaïque, et entre le panneau photovoltaïque et le corps de tuile, induit la formation d'un ensemble robuste à boucle mécaniquement et structurellement fermée, comprenant ces organes indépendamment de toute intervention d'autres organes que l'élément de couverture est susceptible de comprendre. On notera cependant que des organes intermédiaires, tels que de rehausse et/ou de protection souple ou analogue, sont susceptibles d'être interposés entre les brides et le panneau photovoltaïque, et entre le panneau photovoltaïque et le corps de tuile, sans pour autant déroger à la règle énoncée relative aux dits appuis directs, dans la mesure où de telles interpositions n'affectent pas l'obtention dudit ensemble robuste successivement composé par les brides, le panneau photovoltaïque et le corps de tuile.

Le dispositif d'assemblage est de structure simple, le panneau photovoltaïque étant maintenu directement plaqué contre le corps de tuile en étant enserré entre les brides et l'assise du corps de tuile. Un tel enserrement est robuste et fiable, et procure un positionnement pérenne rigoureux du panneau photovoltaïque sur le corps de tuile à partir d'un positionnement des brides sur le corps de tuile qui est aisé et rapide à opérer par ancrage. Une telle démarche est notamment associée à diverses solutions proposées isolément ou en combinaison pour parvenir à surmonter les difficultés issues des contraintes qui ont été énoncées.

Les brides sont aptes à être amovibles et sont indépendantes l'une de l'autre, ce qui facilite l'assemblage entre le corps de tuile et le panneau photovoltaïque et ce qui simplifie une éventuelle opération de maintenance nécessitant un retrait du panneau photovoltaïque. L'assise que comporte le corps de tuile peut être avantageusement formée à partir d'une pluralité de reliefs en saillie qui ménagent entre eux des passages de ventilation, d'écoulement et d'évacuation d'eau. De tels passages permettent de limiter une éventuelle condensation d'humidité préjudiciable au fonctionnement du panneau photovoltaïque, voire de collecter et d'évacuer de l'eau provenant d'une telle condensation et/ou d'éventuelles infiltrations à partir du sommet de l'élément de couverture en position d'installation sur la toiture. Le positionnement du panneau photovoltaïque sur le corps de tuile peut être avantageusement complété en exploitant des talons de butée latérale sur lesquels peuvent prendre prise les brides, ces talons étant aptes à être intégrés de moulage au corps de tuile. Le positionnement des brides en bordure latérale du panneau photovoltaïque et leur prise d'appui contre celui-ci à sa grande face extérieure permettent de maintenir le panneau photovoltaïque en position sans faire obstacle à un écoulement sur la toiture et à une évacuation naturels des eaux de ruissellement. Le panneau photovoltaïque est disposé à partir d'un geste unidirectionnel à l'intérieur d'une cavité que comporte le corps de tuile, cette cavité étant largement ouverte à sa base pour autoriser une évacuation des eaux infiltrées ou présentes entre le panneau photovoltaïque et le fond de la cavité. Le talon que comporte le corps de tuile est apte à loger des organes de positionnement que comportent les brides pour simplifier leur installation et le verrouillage en position par enserrement du panneau photovoltaïque. Ces organes de positionnement peuvent être mis à profit pour la fixation des brides sur le corps de tuile en vue de leur ancrage, notamment par vissage. Une telle opération par vissage permet de garantir la fermeté de l'ancrage des brides dans le corps de tuile, et en conséquence du bridage du panneau photovoltaïque contre le corps de tuile. L'opération de vissage peut être réalisée à partir du dessous du corps de tuile et de manière non débouchante sur l'extérieur pour ne pas affecter l'étanchéité de l'élément de couverture. L'ensemble des organes nécessaires à l'installation du panneau photovoltaïque sont répartis entre les brides et le corps de tuile auxquels ils sont respectivement intégrés de moulage. De telles intégrations de moulage sont réalisées sans pour autant complexifier outre mesure la structure individuelle des brides et du corps de tuile pour leur fabrication à moindres coûts, ni sans affecter la conformation du corps de tuile nécessaire à sa mise en coopération avec un corps de tuile voisin de conformation similaire qui est indifféremment porteur ou non d'un panneau photovoltaïque. L'ensemble du dispositif d'assemblage est obtenu à moindres coûts par intégration de moulage dans les brides et dans le corps de tuile, et est d'une structure simple qui peut être aisément mis en oeuvre. Cette mise en oeuvre peut être indifféremment réalisée en atelier ou sur site, y compris par une personne non qualifiée, tout en procurant un assemblage robuste et fiable entre le panneau photovoltaïque et le corps de tuile.

Plus particulièrement, les brides sont rapportées sur le corps de tuile par l'intermédiaire de moyens d'ancrage. De tels moyens d'ancrage sont susceptibles d'être du type par emboîtement dur à partir d'une mise en coopération entre des organes d'emboîtement intégrés de moulage respectivement aux brides et au corps de tuile. De tels moyens d'ancrage sont encore susceptibles d'être du type mettant en oeuvre des organes de fixation indépendants qui coopèrent entre eux ou qui sont rapportés sur l'élément de couverture en prise conjointe sur les brides et sur le corps de tuile. Une autre solution d'ancrage consiste à sceller les brides sur le corps de tuile. Il est cependant préféré de procurer un ancrage réversible des brides sur le corps de tuile pour leur conférer un caractère amovible, notamment par vissage au moyen d'organes de fixation rapportés.

Ainsi et selon une forme préférée de réalisation, l'ancrage des brides sur le corps de tuile est facilement réversible, les brides étant amovibles en étant individuellement rapportées sur le corps de tuile par des moyens de fixation qui leurs sont affectées.

De préférence, les brides s'étendent exclusivement latéralement en bordure du panneau photovoltaïque le long de ses bords d'extension orientés suivant la pente de la toiture. Ces dispositions permettent d'éviter que les brides ne fassent obstacle à un écoulement naturel des eaux de ruissellement, sans avoir à complexifier la structure du dispositif d'assemblage ni celle du corps de tuile, notamment au regard de sa mise en coopération avec un corps de tuile voisin porteur ou non d'un panneau photovoltaïque.

De préférence encore, les brides sont conformées en cornière composée d'une aile d'appui contre le corps de tuile et d'un rebord d'appui contre la face extérieure du panneau photovoltaïque. Les brides sont robustes et la prise d'appui qu'elles prennent conjointement sur le corps de tuile et contre le panneau photovoltaïque en est raffermie. L'aile d'appui est avantageusement orientée suivant un plan général parallèle à celui du panneau photovoltaïque, ce qui permet de simplifier l'ancrage des brides sur le corps de tuile tout en évitant une mise en surplomb encombrante des brides par rapport au plan général de l'élément de couverture.

Le rebord d'appui est préférentiellement effilé suivant la direction générale d'extension des brides correspondante à la pente de la toiture. Les rebords que comportent les brides sont en outre exploités pour canaliser les eaux de ruissellement suivant l'orientation de la pente globale de la toiture.

Selon une forme préférée de réalisation, des organes de positionnement coopérants sont respectivement ménagés sur le corps de tuile et sur chacune des brides. De tels organes de positionnement sont avantageusement intégrés de moulage respectivement aux brides et au corps de tuile, et permettent une installation rapide et aisée des brides et du panneau photovoltaïque sur le corps de tuile.

Les organes de positionnement associent notamment des pions ménagés sur l'aile d'appui que comportent les brides, et des fûts de réception des pions qui sont ménagés dans un talon latéral que comporte le corps de tuile. De tels organes de centrage sont de préférence à surface de révolution pour simplifier leur réalisation par intégration de moulage. Le positionnement et l'immobilisation par ancrage des brides sur le corps de tuile sont aisément réalisés à partir d'une mise en coopération par emboîtement des organes de positionnement entre eux, puis par fixation l'un à l'autre des brides et du corps de tuile qui est aisée à opérer après immobilisation relative par emboîtement entre les brides et le corps de tuile.

Selon une forme avantageuse de réalisation, les organes de positionnement affectés aux brides comportent un évidement intérieur borgne pour la réception d'un organe de fixation prenant appui contre les organes de positionnement affectés au corps de tuile. Ces dispositions permettent de réaliser aisément l'ancrage des brides sur le corps de tuile, par vissage ou analogue notamment, à partir de la face de dessous de l'élément de couverture et sans induire à sa face de dessus la présence d'une ouverture préjudiciable à l'étanchéité de la couverture. On comprendra par face de dessous de l'élément de couverture sa grande face orientée vers le bâtiment, et par face de dessus de l'élément de couverture sa grande face orientée vers l'environnement extérieur.

De préférence, l'assise que comporte le corps de tuile est formée à partir de reliefs qui ménagent entre eux des passages de ventilation et d'écoulement d'eau hors de l'espace compris entre la grande face intérieure du panneau photovoltaïque et la face de dessus du corps de tuile qui est orientée vers le panneau photovoltaïque. Les passages ménagés dans l'assise induisent une ventilation naturelle permettant de limiter les effets de condensation de l'humidité sur le panneau photovoltaïque, et procurent le cas échéant un drainage des eaux issues d'une telle condensation et/ou en provenance d'éventuelles infiltrations depuis le sommet de l'élément de couverture installé sur la toiture.

Selon une forme préférée de réalisation, le corps de tuile comporte une cavité de réception du panneau photovoltaïque qui est ouverte à son extrémité basse. On comprendra par extrémité basse l'extrémité du corps de tuile opposée à son extrémité de sommet en position d'installation de l'élément de couverture sur une toiture. De préférence, l'ouverture que comporte la cavité s'étend sur la totalité de sa tranche correspondante pour limiter, voire éviter une rétention des eaux de ruissellement. Pour éviter un glissement du panneau photovoltaïque mis en place sur le corps de tuile et incliné suivant la pente de la toiture, le corps de tuile comporte des taquets de retenue du panneau photovoltaïque à l'encontre de son glissement naturel à travers l'ouverture de la cavité. La cavité et les taquets de retenue sont avantageusement intégrés de moulage au corps de tuile. La mise en place du panneau photovoltaïque est simple à effectuer, à partir de son dépôt suivant un mouvement unidirectionnel à l'intérieur de la cavité dont le fond constitue ladite assise de soutien. Le panneau photovoltaïque est encadré latéralement et à sa tranche supérieure par les bords de la cavité, et est retenu à sa tranche inférieure par les taquets.

Le panneau photovoltaïque étant en place sur le corps de tuile, son verrouillage sur ce dernier est aisément réalisé par l'intermédiaire des brides latérales. L'assemblage entre le corps de tuile et le panneau photovoltaïque est limité à l'installation de ce dernier dans la cavité à partir du dit mouvement unidirectionnel, puis de la mise en appui du panneau photovoltaïque contre les reliefs rehaussant le fond de la cavité au moyens des brides ancrées dans le corps de tuile.

Le corps de tuile comporte avantageusement dans son plan général un organe de traversée pour le passage d'une connectique de raccordement du panneau photovoltaïque à un autre panneau photovoltaïque porté par un élément de couverture voisin et/ou à un réseau de distribution. Cet organe de traversée est par exemple agencé en fût ou analogue qui est avantageusement intégré de moulage au corps de tuile et qui ménage un passage entre les deux grandes faces opposées du corps de tuile. Le panneau photovoltaïque est mis en relation avec la connectique de, raccordement qui lui est affectée par l'intermédiaire de câbles ou analogues qui sont noyés dans un corps préférentiellement souple de forme complémentaire à l'organe de traversée.

La présente invention a aussi pour objet un élément de couverture comportant un panneau photovoltaïque globalement plan et un corps de tuile qui sont assemblés l'un à l'autre par un dispositif d'assemblage tel qu'il vient d'être décrit.

Selon une approche globale de la structure d'un tel élément de couverture, celui-ci est équipé d'un couple de brides latérales qui sont disposées de part et d'autre du panneau photovoltaïque, en bordure de ses bords latéraux correspondant orientés suivant la pente de la toiture. Ces brides latérales sont notamment ancrées sur le corps de tuile et prennent directement appui contre la face supérieure du panneau photovoltaïque. Cette prise d'appui est réalisée à l'encontre d'un appui antagoniste que prend le panneau photovoltaïque directement contre une assise du corps de tuile. Cette assise est avantageusement formée à partir de reliefs ménageant entre eux des passages de ventilation et d'écoulement d'eau.

La présente invention sera mieux comprise à la lecture de la description qui va en être faite d'un exemple de réalisation, en relation avec les figures des planches annexées, dans lesquelles :

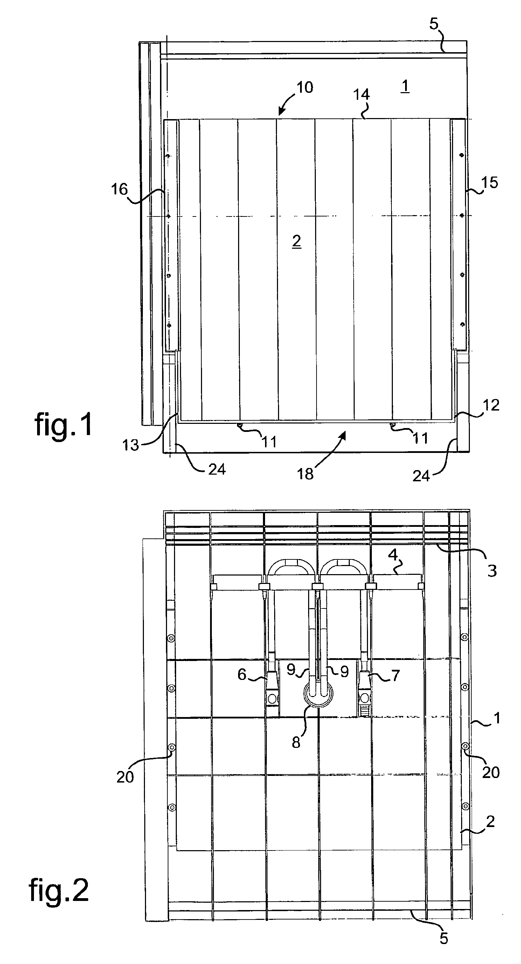

- Les figures 1 et 2 sont des représentations d'un élément de couverture selon la présente invention, respectivement en vue de dessus et en vue de dessous,
- La figure 3 est une représentation en perspective d'un panneau photovoltaïque mis en place sur un corps de tuile que comprend l'élément de couverture illustré sur les figures précédentes,
- La figure 4 est un détail en coupe d'un élément de couverture illustré sur les figures 1 et 2,
- Les figures 5 et 6 sont des représentations en coupe respectivement transversale et longitudinale d'un élément de couverture illustré sur les figures 1 et 2,
- Les figures 7 et 8 sont des représentations d'une bride que comprend l'élément de couverture illustré sur les figures 1 et 2, illustrée respectivement en perspective et de profil.

Sur les figures, un élément de couverture pour toiture associe un corps de tuile 1 et un panneau photovoltaïque 2. Le corps de tuile 1 est formé par moulage d'un matériau plastique, et comporte des reliefs 3, 4, 5 de jonction avec un élément de couverture voisin, pour son installation sur une charpente par rangées superposées suivant la pente de la couverture. Le panneau photovoltaïque 2 est composé d'une ou de plusieurs cellules photovoltaïques, et est équipé d'une connectique 6, 7 de raccordement électrique à un élément de couverture voisin et/ou à un réseau de distribution en énergie.

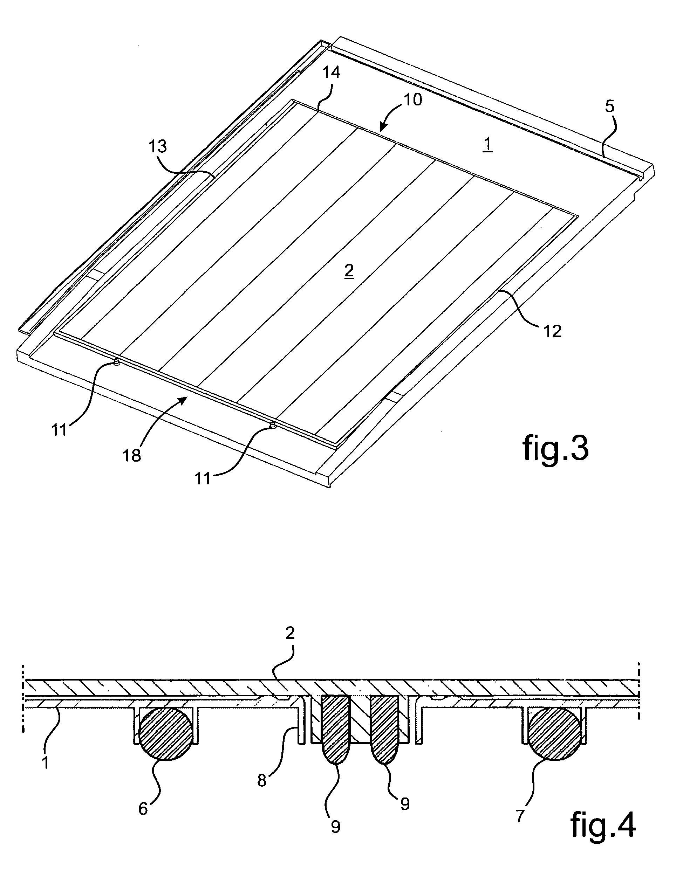

Sur les figures 3 et 4 plus particulièrement, le panneau photovoltaïque 2 est installé à la face supérieure du corps de tuile 1, qui comporte un organe de traversée 8 pour le passage à son travers de câbles 9 équipant le panneau photovoltaïque 2. Le corps de tuile 1 comporte aussi à sa face supérieure une cavité 10 pour la réception du panneau photovoltaïque 2. Cette cavité est ouverte à l'extrémité basse du corps de tuile 1 suivant une extension correspondante à la totalité de la tranche basse de la cavité 10. Des taquets 11 sont intégrés de moulage au corps de tuile 1 pour interdire un glissement du panneau photovoltaïque 2 mis en place à l'intérieur du corps de tuile 1 à travers l'ouverture 18 de la cavité 10. Le positionnement du panneau voltaïque 2 sur le corps de tuile 1 est obtenu par son installation à partir d'un mouvement unidirectionnel vers l'intérieur de la cavité 10. Ce mouvement unidirectionnel est suffisant pour autoriser la traversée du corps de tuile 1 par la connectique 9 que comporte le panneau photovoltaïque 2, et le positionnement de ce dernier sur le corps de tuile 1 entre les taquets 11 et les tranches latérales 12, 13 et de sommet 14 de la cavité 10.

Le panneau photovoltaïque 2 étant mis en place sur le corps de tuile 1, son verrouillage en position est obtenu au moyen de brides latérales 15,16 qui sont ancrées sur le corps de tuile 1 et qui prennent appui contre la face supérieure du panneau photovoltaïque 2 à l'encontre d'un appui antagoniste pris par ce dernier contre une assise du corps de tuile 1. Cette assise est formée par le fond de la cavité 10, qui comporte des reliefs d'appui 25 ménageant entre eux des passages pour la ventilation de l'espace compris entre le fond de la cavité 10 et la face inférieure du panneau photovoltaïque 2. Ces passages sont en outre exploités pour autoriser l'écoulement d'eau en provenance d'une condensation de l'humidité ambiante et/ou d'éventuelles infiltrations d'eau en provenance du sommet de l'élément de couverture, puis une évacuation de cette eau à travers l'ouverture 18 de la cavité 10. Les brides latérales 15, 16 sont installées en bordure des bords latéraux du panneau photovoltaïque 2 contre lesquels elles prennent respectivement appui, en s'étendant suivant la pente de la toiture lorsque l'élément de couverture est en position d'installation sur une charpente de cette toiture.

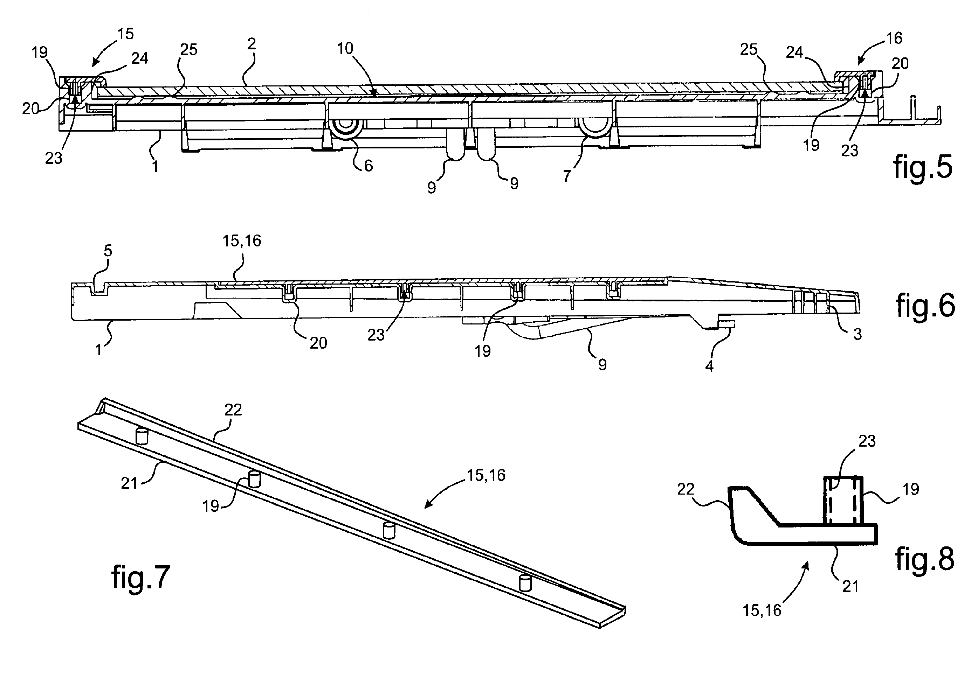

Les brides 15, 16 sont ancrées sur le corps de tuile 1 de manière réversible pour faciliter les opérations de maintenance. Des moyens d'ancrage associent des moyens de fixation et des moyens de positionnement relatif entre les brides 15, 16 et le corps de tuile 1. Ces moyens de positionnement associent des pions 19 intégrés de moulage aux brides 15, 16 et des fûts 20 intégrés de moulage au corps de tuile 1. En se reportant plus particulièrement aux figures 7 et 8, les brides 15, 16 sont conformées en cornière et associent chacune une aile d'appui 21 contre le corps de tuile 1 et un rebord d'appui 22 contre le panneau photovoltaïque 2. Le rebord d'appui 22 est effilé suivant la direction générale d'extension des brides 15, 16 correspondant sensiblement à la pente de la toiture. Les pions 19 sont ménagés sur l'aile d'appui 21, et comportent un évidement intérieur borgne 23 pour la réception d'un organe de fixation, notamment agencé en vis ou organe de fixation analogue non représenté. Les pions 19 sont reçus par glissement à l'intérieur des fûts 20, qui sont ménagés dans des talons latéraux 24 que comporte le corps de tuile 1, puis sont fixés au corps de tuile 1 par les organes de fixation qui prennent prise dans l'évidement intérieur 23 des pions 19 et qui prennent axialement appui contre les fûts 20.

## Revendications

1. Dispositif d'assemblage entre au moins un panneau photovoltaïque (2) globalement plan et un corps de tuile (1) que comprend un élément de couverture d'une toiture de bâtiment, **caractérisé en ce que** le dispositif d'assemblage comprend des brides (15, 16) ancrables sur le corps de tuile (1), qui prennent directement appui contre la grande face extérieure du panneau photovoltaïque (2) à l'encontre de son plaquage à sa grande face opposée intérieure directement contre une assise formée par le corps de tuile (1).

2. Dispositif d'assemblage selon la revendication 1, **caractérisé en ce que** l'ancrage des brides (15, 16) sur le corps de tuile (1) est facilement réversible, les brides (15, 16) étant amovibles en étant individuellement rapportées sur le corps de tuile (1) par des moyens de fixation qui leurs sont affectées.

3. Dispositif d'assemblage selon l'une quelconque des revendications précédentes, **caractérisé en ce que** les brides (15,16) s'étendent exclusivement latéralement en bordure du panneau photovoltaïque (2) le long de ses bords d'extension orientés suivant la pente de la toiture.

4. Dispositif d'assemblage selon l'une quelconque des revendications précédentes, **caractérisé en ce que** les brides (15, 16) sont conformées en cornière composée d'une aile d'appui (21) contre le corps de tuile (1) et d'un rebord d'appui (22) contre la face extérieure du panneau photovoltaïque (2).

5. Dispositif d'assemblage selon les revendications 3 et 4, **caractérisé en ce que** le rebord d'appui (22) est effilé suivant la direction générale d'extension des brides (15,16) correspondante à la pente de la toiture.

6. Dispositif d'assemblage selon l'une quelconque des revendications précédentes, **caractérisé en ce que** des organes de positionnement coopérants (19,20) sont respectivement ménagés sur le corps de tuile (1) et sur chacune des brides (15, 16).

7. Dispositif d'assemblage selon la revendication 6, **caractérisé en ce que** les organes de positionnement associent des pions (19) ménagés sur l'aile d'appui (21) que comportent les brides (15, 16), et des fûts (20) de réception des pions (19) qui sont ménagés dans un talon latéral (24) que comporte le corps de tuile (1).

8. Dispositif d'assemblage selon l'une quelconque des revendications 6 et 7, **caractérisé en ce que** les organes de positionnement (19) affectés aux brides (15 ,16) comportent un évidement intérieur borgne (23) pour la réception d'un organe de fixation prenant appui contre les organes de positionnement (20) affectés au corps de tuile (1).

9. Dispositif d'assemblage selon l'une quelconque des revendications précédentes, **caractérisé en ce que** l'assise que comporte le corps de tuile (1) est formée à partir de reliefs (25) qui ménagent entre eux des passages de ventilation et d'écoulement d'eau hors de l'espace compris entre la grande face intérieure du panneau photovoltaïque (2) et la face de dessus du corps de tuile (1) qui est orientée vers le panneau photovoltaïque (2).

10. Dispositif d'assemblage selon l'une quelconque des revendications précédentes, **caractérisé en ce que** le corps de tuile (1) comporte une cavité (10) de réception du panneau photovoltaïque (2) qui est ouverte à son extrémité basse, et des taquets (11) de retenue du panneau photovoltaïque (2) à l'encontre de son glissement naturel.

11. Dispositif d'assemblage selon l'une quelconque des revendications précédentes, **caractérisé en ce que** le corps de tuile (1) comporte dans son plan général un organe de traversée (8) pour le passage d'au moins un organe (8,9) de raccordement électrique entre le panneau photovoltaïque (2) et une connectique (6, 7) de raccordement de l'élément de couverture.

12. Elément de couverture comportant un panneau photovoltaïque (2) globalement plan et un corps de tuile (1) qui sont assemblés l'un à l'autre par un dispositif selon l'une quelconque des revendications précédentes.

13. Elément de couverture selon la revendication 12, **caractérisé en ce qu'**il est équipé d'un couple de brides latérales (15, 16) qui sont ancrées sur le corps de tuile (1) et qui prennent directement appui contre la face supérieure du panneau photovoltaïque (2) à l'encontre d'un appui antagoniste que prend le panneau photovoltaïque (2) directement contre une assise du corps de tuile (1), cette assise étant formée à partir de reliefs (25) ménageant entre eux des passages de ventilation et d'écoulement d'eau.
